# EUROPÄISCHE PATENTSCHRIFT

(11) **EP 3 988 384 B1**
(45) Veröffentlichungstag und Bekanntmachung des Hinweises auf die Patenterteilung: **29.11.2023**
(21) Anmeldenummer: 21202744.5
(22) Anmeldetag: 14.10.2021
(51) Int. Cl.: B60L 53/66, B60L 53/67, B60L 53/63

(54) **COMPUTERIMPLEMENTIERTES VERFAHREN UND VORRICHTUNG ZUM LOKALEN LASTMANAGEMENT VON LADESTATIONEN ZUM LADEN VON ELEKTROFAHRZEUGEN IN EINEM LADESTATIONSSYSTEM**
COMPUTER-IMPLEMENTED METHOD AND DEVICE FOR LOCAL LOAD MANAGEMENT OF CHARGING STATIONS FOR CHARGING ELECTRIC VEHICLES IN A CHARGING STATION SYSTEM
PROCÉDÉ MIS EN UVRE PAR ORDINATEUR ET DISPOSITIF DE GESTION DE CHARGE LOCALE DES STATIONS DE CHARGE PERMETTANT DE CHARGER DES VÉHICULES ÉLECTRIQUES DANS UN SYSTÈME DE STATION DE CHARGE

(30) Priorität: 20.10.2020 DE 102020127626
(43) Veröffentlichungstag der Anmeldung: 27.04.2022
(73) Patentinhaber: Compleo Charging Solutions GmbH & Co. KG, 44379 Dortmund (DE)
(72) Erfinder: Kledewski, Ingo, 44319 Dortmund (DE); Skrbic, Srdan, 44265 Dortmund (DE)
(74) Vertreter: Gottschald Patentanwälte Partnerschaft mbB

(56) Entgegenhaltungen:
- EP-A1- 3 048 691
- CN-A- 111 082 491
- CN-B- 102 752 299
- DE-A1-102018 222 456

## Beschreibung

Die Erfindung betrifft ein computerimplementiertes Verfahren zum lokalen Lastmanagement von Ladestationen zum Laden von Elektrofahrzeugen in einem Ladestationssystem, ein hierzu korrespondierendes Computerprogrammprodukt, einen computerlesbaren Datenspeicher mit dem Computerprogrammprodukt, eine Vorrichtung mit einem Computer zum lokalen Lastmanagement von Ladestationen zum Laden von Elektrofahrzeugen in einem Ladestationssystem sowie ein Ladestationssystem mit der Vorrichtung.

Häufig bestehen Ladestationssysteme mit zwei oder mehr Ladestationen, die an einem gemeinsamen Netzanschluss zur Versorgung der Ladestationen mit Strom angeschlossen sind, aus baugleichen bzw. identischen Ladestationen oder zumindest Ladestationen des gleichen Herstellers. Dies ändert sich unter Umständen dann, wenn zusätzliche Ladestationen an den gemeinsamen Netzanschluss angeschlossen werden bzw. das Ladestationssystem um eine Ladestation oder mehrere weitere Ladestationen erweitert wird. Aufgrund technischer Aktualisierung beispielsweise können nun Ladestationen anderen Typs verwendet werden, beispielsweise mit höherer Leistung oder aufgrund technischen Fortschritts oder von Modellaktualisierungen mit überarbeiteter Hardware, Software usw. Ein Betreiber des Ladestationssystems kann zudem Ladestationen anderer Hersteller für die weiteren Ladestationen wählen, beispielsweise weil die bereits installierten Ladestationen nicht mehr beim alten Hersteller verfügbar sind, Kosten eingespart werden können oder ein anderes Modell präferiert wird. Ein solches Ladestationssystem verfügt dann auch über Ladestationen unterschiedlicher Hersteller bzw. sind die Ladestationen unterschiedlicher Hersteller dann an einem gemeinsamen Netzanschluss angeschlossen, der wiederum am Energienetz angeschlossen ist.

Ein lokales Lastmanagement an dem Ladestationssystem zur Verteilung der an dem gemeinsamen Netzanschluss zur Verfügung stehenden Leistung erfolgt über eine Kommunikation eines Steuergeräts für das lokale Lastmanagement mit den Ladestationen. Wenn die Ladestationen aber nicht alle vom gleichen Typ sind, insbesondere wenn die Ladestationen von unterschiedlichen Herstellern stammen, können sich an den Ladestationen mittels des Lastmanagements ausübbare Funktionen an unterschiedlichen Positionen innerhalb der Ladestation bzw. einem entsprechenden Datenspeicher, in dem die Positionen mit den entsprechenden Funktionen abgelegt sind, befinden.

Um genau zu sein, verfügen die Ladestationen über sogenannte Register, die zur Ausübung einer Funktion der Ladestation von dem Steuergerät des Ladestationssystems ausgelesen und/oder beschrieben werden können. Ein solches Register in einer Ladestation ist beispielsweise das Ladezustand-Register. Beim Auslesen des Ladezustand-Registers wird der Ladezustand als Zustandsinformation ausgegeben, die hier beispielhaft eine ausgeübte Funktion darstellt. Beispielsweise kann die Zustandsinformation lauten, das ein Ladeprozess aktiv ist oder die Ladestation bereit für einen Ladevorgang ist und auf eine Reaktion des Elektrofahrzeugs wartet oder ein Fehler aufgetreten ist. Um nun das Ladezustand-Register auszulesen, muss das Steuergerät die entsprechende Registeradresse des Ladezustand-Registers abrufen. Mit anderen Worten muss das Steuergerät wissen, welches Register das Ladezustand-Register ist bzw. an welcher Position es sich von allen Registern der Ladestation befindet, damit es das richtige Register auslesen kann, um im vorliegenden Beispiel den Ladezustand zu bestimmen.

Bei einem Ladestationssystem mit Ladestationen vom gleichen Hersteller ist das Abrufen der korrekten Registeradresse für den Zugriff auf ein bestimmtes Register trivial bzw. stellt kein Problem dar, da das Ladezustand-Register jeder Ladestation, genauso wie Register mit anderen Funktionen, in allen Ladestationen über die gleiche Registeradresse an den Ladestationen abgerufen werden kann, weil Ladestationen desselben Herstellers (ggf. auch des gleichen Typs) gleich programmiert werden.

Dies muss aber bei einem Ladestationssystem mit Ladestationen, die von unterschiedlichen Herstellern stammen, nicht mehr der Fall sein bzw. kann davon nicht ausgegangen werden. Die Hersteller können nämlich die Register gleicher Funktion, hier beispielhaft etwa dem Abrufen des Ladezustands, an unterschiedlichen Registeradressen ablegen bzw. mit unterschiedlichen Registeradressen versehen bzw. abspeichern. In diesem Falle weiß das entsprechende Steuergerät für das Lastmanagement nach dem Installieren einer neuen Ladestation in einem bereits vorhandenen Ladestationssystem oder ganz prinzipiell bei Installation oder Vorliegen von Ladestationen unterschiedlicher Hersteller in einem Ladestationssystem nicht, welche Registeradresse es aufrufen muss, um auf das entsprechende Register zuzugreifen bzw. mittels Auslesens und/oder Beschreibens die entsprechende Funktion auszuüben.

Im Stand der Technik existiert keine Lösung, die ein zuverlässiges, sicheres und effektives Lastmanagement von Ladestationen unterschiedlichen Typs oder unterschiedlicher Hersteller an einem Netzanschluss ermöglicht, wobei die Ladestationen jedenfalls dadurch gekennzeichnet sind, dass für die Ladestationen ansonsten funktionsgleiche Register an unterschiedlichen Registeradressen in den Ladestationen abgelegt sind.

CN102752299 A lehrt die Verwendung von Ladevorrichtungen verschiedener Hersteller in in einer Ladestation.

Aufgabe der Erfindung ist es demnach, eine entsprechend zuverlässige, sichere und effektive Lösung bereitzustellen, die ein lokales Lastmanagement von beliebigen Ladestationssystemen bzw. von Ladestationssystemen mit beliebigen Ladestationen ermöglicht.

Die voranstehende Aufgabe wird durch die Gegenstände der Patentansprüche, insbesondere durch ein Computerimplementiertes Verfahren zum lokalen Lastmanagement von Ladestationen zum Laden von Elektrofahrzeugen in einem Ladestationssystem nach Anspruch 1, ein Computerprogrammprodukt nach Anspruch 8, einen computerlesbaren Datenspeicher nach Anspruch 11, eine Vorrichtung mit einem Computer zum lokalen Lastmanagement von Ladestationen zum Laden von Elektrofahrzeugen in einem Ladestationssystem nach Anspruch 12 sowie ein Ladestationssystem nach Anspruch 17 gelöst. Weitere Vorteile und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt, dem erfindungsgemäßen computerlesbaren Datenspeicher, der erfindungsgemäßen Vorrichtung und dem erfindungsgemäßen Ladestationssystem sowie jeweils umgekehrt, sodass bezüglich der Offenbarung zu den einzelnen Erfindungsaspekten stets wechselseitig Bezug genommen wird beziehungsweise werden kann.

Demnach wird die Aufgabe gemäß einem ersten Aspekt gelöst durch ein Computerimplementiertes Verfahren zum lokalen Lastmanagement von Ladestationen zum Laden von Elektrofahrzeugen in einem Ladestationssystem, wobei die Ladestationen an einem gemeinsamen Netzanschluss angeschlossen sind und mit Registern ausgestattet sind, die mittels eines Computers für das lokale Lastmanagement auslesbar und/oder beschreibbar sind, wobei die Ladestationen sich derart voneinander unterscheiden, dass in den Ladestationen enthaltene funktionsgleiche Register an unterschiedlichen Registeradressen in den Ladestationen abgelegt sind, wobei das Verfahren die folgenden Schritte aufweist:
(a) Ermitteln einer Registeradresse eines Registers einer der Ladestationen für eine gewünschte Funktion dieser Ladestation anhand einer vorgegebenen Zuordnung der funktionsgleichen Register zu den verschiedenen Registeradressen der Ladestationen,
(b) Abrufen der ermittelten Registeradresse, und
(c) Auslesen und/oder Beschreiben des Registers an der abgerufenen Registeradresse, insbesondere im Rahmen des lokalen Lastmanagements, zum Ausüben der gewünschten Funktion der Ladestation mit der abgerufenen Registeradresse.

Folglich werden zur Überwindung des eingangs beschriebenen Problems, das insbesondere bei Ladestationen unterschiedlicher Hersteller in dem Ladestationssystem auftreten kann, die mittels des Steuergeräts bzw. Computers abrufbare Registeradressen mittels der vorgegebenen Zuordnung ermittelt, abgerufen und anschließend ausgelesen und/oder beschrieben, um die gewünschte Funktion, die mittels des Registers an der abgerufenen Registeradresse ausgeübt werden kann bzw. durch dieses Register vorgesehen ist, auszuüben. Die Begriffe Steuergerät und Computer können dabei synonym verwendet werden.

Die vorgegebene Zuordnung ordnet über zumindest zwei oder mehr Ladestationen hinweg existierenden funktionsgleichen Registern jeweils die passende Registeradresse in der jeweiligen der zumindest zwei oder mehr Ladestationen zu. Wie eingangs erwähnt, können die Ladestationen, also die zumindest zwei oder mehr Ladestationen des Ladestationssystems, unterschiedlichen Typs sein und/oder von unterschiedlichen Herstellern stammen. Dies kann die Vergabe von unterschiedlichen Registeradressen für ansonsten funktionsgleiche Register, die durch Auslesen und/oder Beschreiben die gleiche Funktion ausüben können, zur Folge haben.

Dabei genügt es erfindungsgemäß bereits, wenn das Ladestationssystem über zwei Ladestationen verfügt, die für zumindest ein funktionsgleiches Register unterschiedliche Registeradressen aufweist. Dann kann für dieses zumindest eine funktionsgleiche Register mittels der vorgegebenen Zuordnung die Registeradresse für den Computer ermittelbar und das Register darüber abrufbar gemacht werden. Dadurch kann ein sicheres, zuverlässiges und effektives Lastmanagement erzielt werden. Gleichwohl kann das Ladestationssystem auch über mehr als zwei, beispielsweise drei, vier oder mehr, also mehrere, Ladestationen verfügen. Selbstverständlich müssen nicht alle Ladestationen funktionsgleiche Register aufweisen. Auch müssen sie diese nicht nur an unterschiedlichen Registeradressen aufweisen. Beispielsweise ist es denkbar, dass ein Ladestationssystem drei Ladestationen aufweist, wobei zwei Ladestationen identisch oder zumindest vom gleichen Typ sind und/oder vom gleichen Hersteller stammen und eine dritte Ladestation davon verschieden ist bzw. von einem anderen Typ ist und/oder anderen Hersteller stammt. Dann wird die vorgegebene Zuordnung zwar nicht für das Lastmanagement der beiden Ladestationen des gleichen Typs bzw. Herstellers benötigt, in denen die funktionsgleichen Register sich an der gleichen Registeradresse befinden. Sehr wohl kann die vorgegebene Zuordnung bzw. das erfindungsgemäße Verfahren aber für das Lastmanagement aller Ladestationen oder zumindest je zwei hinsichtlich ihrer Registeradressierung unterschiedlicher Ladestationen genutzt werden. Unter der unterschiedlichen Registeradressierung wird im Folgenden verkürzt das Vorliegen von funktionsgleichen Registern mit unterschiedlichen Registeradressen in den Ladestationen gemeint. Ferner ist es selbstverständlich nicht notwendig, dass alle funktionsgleichen Register von Ladestationen sich an unterschiedlichen Registeradressen in den Ladestationen befinden müssen. Wie bereits erwähnt genügen bereits ein funktionsgleiches Register oder zwei, drei oder mehr funktionsgleiche Register mit unterschiedlichen Registeradressen in den Ladestationen. Wenn diese funktionsgleichen Register nämlich nicht vom lokalen Lastmanagement abgerufen und damit das zugehörige Register nicht ausgelesen und/oder beschrieben werden kann, kann ein einwandfreies und sicheres Lastmanagement auf lokaler Ebene der Ladestationen des Ladestationssystems nämlich nicht betrieben werden. Unabhängig davon kann die vorgegebene Zuordnung eine eindeutige Zuordnung machen, damit das Steuergerät stets das richtige Register ausliest und/oder beschreibt, um die gewünschte Funktion auszuüben.

Erfindungsgemäß sind die Ladestationen zum Laden von Elektrofahrzeugen ausgebildet. Dies schließt jedoch nicht aus, dass einzig rein batteriebetriebene Elektrofahrzeuge an den Ladestationen geladen werden können. Vielmehr sind hier Elektrofahrzeuge im weiteren Sinne umfasst, sodass beispielsweise auch Plug-In Hybridfahrzeuge hiervon umfasst sind und ebenso an den Ladestationen geladen werden können. Dabei kann eine Ladestation selbst eine beliebige Anzahl von Ladepunkten, also ein, zwei oder mehr Ladepunkte, aufweisen. Mittels je eines Ladepunkts lässt sich jeweils ein Fahrzeug elektrisch laden. Da die Ladestationen Energie von elektrischem Strom bereitstellen können die Ladestationen auch als elektrische Ladestationen bezeichnet werden. Die Ladestationen können dabei auf unterschiedliche Art und Weise Energie übertragen, beispielsweise drahtgebunden oder drahtlos, etwa induktiv oder kapazitiv. Eine Ladestation kann also beispielsweise durch eine Ladesäule gebildet werden. Sie kann aber alternativ auch durch eine in einen Parkplatz eingebettete Vorrichtung zur drahtlosen Energieübertragung gebildet werden.

Das erfindungsgemäße Verfahren erfordert zumindest das einmalige Durchführen der Verfahrensschritte (a), (b) und (c), insbesondere in der angegebenen Reihenfolge.

Gleichwohl ist es möglich und kann beim lokalen Lastmanagement mitunter erforderlich sein, dass die Verfahrensschritte (a), (b) und (c) während eines Ladevorgangs oder mehreren Ladevorgängen für dieselben Register und/oder unterschiedliche Register wiederholt werden. Dabei können beispielsweise unterschiedliche Register derselben Ladestationen ausgelesen und/oder beschrieben werden. Beispielsweise können zu Beginn eines Ladevorgangs andere Register ausgelesen und/oder beschrieben werden als während des Ladevorgangs und zum Ende oder nach dem Ladevorgang an dieser Ladestationen. Auch kann eines oder es können einige der Register ausgelesen werden, während eines oder einige andere Register beschrieben werden. Hierneben können parallel auch die Register, auch hier wieder unterschiedliche Register, einer anderen Ladestation ausgelesen und/oder beschrieben werden, wobei auch hier wieder auf die vorgegebene Zuordnung zurückgegriffen wird, um die für das auszulesende und/oder zu beschreibende Register die passende Registeradresse der jeweiligen Ladestation zu ermitteln und abzurufen. Insoweit kann selbstverständlich vorgesehen werden, dass die Verfahrensschritte (a), (b) und (c) zeitlich überlappend, zeitgleich oder zeitlich parallel für verschiedene Ladestationen durchgeführt werden, wobei die funktionsgleichen oder in ihrer Funktion unterschiedliche Register der verschiedenen Ladestationen ausgelesen und/oder beschrieben werden.

Auch kann vorgesehen sein, dass die vorgegebene Zuordnung als eine Konkordanztabelle ausgebildet ist und das Ermitteln der zumindest einen Registeradresse ein Entnehmen der zumindest einen Registeradresse für die gewünschte Funktion aus der Konkordanztabelle umfasst. Die Konkordanztabelle kann folglich derart beschaffen sein, dass in ihr für jede der Ladestationen des Ladestationssystems die Register mit ihrer jeweiligen Funktion bzw. der Benennung der Funktion und ihrer jeweiligen Registeradresse, unter der das Register abrufbar ist, abgelegt sind. Diese Informationen können tabellarisch vorliegen. Eine solche Konkordanztabelle kann als Look Up-Tabelle ausgestaltet sein, was die Ermittlung der Registeradresse anhand der gewünschten Funktion besonders einfach macht. Zur Unterscheidung der Ladestationen voneinander kann eine entsprechende Kennung der Ladestationen in der Konkordanztabelle ebenfalls für jede der Ladestationen abgelegt sein. Die Kennung kann beispielsweise durch eine Nummerierung, beispielsweise fortlaufend, ein Ladestationscharakteristikum, einen Ladestationstyp bzw. seine Bezeichnung und/oder einen Hersteller der Ladestation bzw. seine Bezeichnung erfolgen. Die beiden letztgenannten haben den Vorteil, dass die Konkordanztabelle einfach den vorhandenen Ladestationen zuordenbar ist und bei möglichen Korrekturen oder Änderungen einfach bearbeitbar ist, da die entsprechende Ladestation in dem Ladestationssystem einfach identifizierbar ist. Möglich ist dabei auch, dass die Konkordanztabelle nicht nur die Register mit ihren Funktionen und Registeradressen von Ladestationen eines konkreten Ladestationssystems aufweist, sondern auch weiterer Ladestationen umfasst. Dann kann das lokale Lastmanagement bei entsprechender Erweiterung des Ladestationssystems um weitere Ladestationen anderer Hersteller, die noch nicht im Ladestationssystem vertreten sind, sehr schnell durch eine entsprechende Einbindung ermöglicht werden. Eine Ergänzung der Konkordanztabelle um neue Daten der neuen Ladestationen des anderen Herstellers entfällt. Alternativ zu der Konkordanztabelle kann die vorgegebene Zuordnung auch in einer anderen Form vorliegen, beispielsweise als eine Zuordnungsfunktion, die den Registern die jeweilige Registeradresse zuordnet.

Ferner kann vorgesehen sein, dass eine an dem Netzanschluss zur Verfügung stehende elektrische Leistung mittels des Auslesens und/oder Beschreibens von Registern an (gemäß Verfahrensschritt (a)) ermittelten Registeradressen der Ladestationen an Fahrzeuge verteilt werden, die an den Ladestationen geladen werden. Bei der gewünschten Funktion kann es sich dabei insbesondere um eine solche handeln, die für das lokale Lastmanagement ausgeübt werden soll. Diese kann sich jedoch auf einen Zeitpunkt vor, während oder nach einem oder mehreren Ladevorgängen an einer oder mehreren Ladestationen des Ladestationssystems beziehen. Insoweit kann die gewünschte Funktion beispielsweise in Form einer Vorbereitung für das lokale Lastmanagement, einer Durchführung des lokalen Lastmanagements oder einer Beendigung des lokalen Lastmanagements ausgeübt werden. Weitere Ausbildungsformen der gewünschten Funktion sowie Beispiele der gewünschten Funktion werden an späterer Stelle näher beschrieben.

Weiterhin kann vorgesehen sein, dass das Verfahren ferner den Schritt eines Herstellens von Kommunikationsverbindungen zwischen dem Computer und den Ladestationen aufweist. Hierfür kann vorgesehen sein, dass Kommunikationsadressen der Ladestationen aus der vorgegebenen Zuordnung ermittelt werden. Die Kommunikationsverbindung ermöglicht dem Computer den Zugriff auf die Register in den Ladestationen. Die Kommunikationsverbindung kann dabei insbesondere drahtgebunden erfolgen. Die drahtgebundene Kommunikationsverbindung kann beispielsweise mittels Ethernet erfolgen.

Die vorgegebene Zuordnung kann neben den bereits weiter oben erwähnten Informationen, insbesondere der Registeradressen, auch die Kommunikationsadresse umfassen. Die Kommunikationsadressen können beispielsweise als IP-Adressen vorliegen. Die Kommunikationsadresse sowie der Ladestationstyp bzw. seine Bezeichnung und der Hersteller der Ladestation bzw. seine Bezeichnung können als Konfigurationsinformationen der Ladestation dienen. Es ist möglich, dass die Konfigurationsinformationen editierbar eingerichtet sind. Sie können mittels einer geeigneten Schnittstelle, wie später noch erläutert wird insbesondere einer graphischen Benutzerschnittstelle, die über ein Authentifizierungsverfahren zur Abfrage der Berechtigung des Benutzers verfügen kann, editierbar sein. So kann eine einfache Integration neuer Ladestationen mit unterschiedlicher Registeradressierung gegenüber den bereits bestehenden Ladestationen des Ladestationssystems in die bestehende vorgegebene Zuordnung erfolgen. Hierzu kann vorgesehen sein, dass der Schritt des Hinzufügens der neuen Ladestation mit den für die vorgegebene Zuordnung erforderlichen Informationen, also zumindest den Registern und zugehörigen Registeradressen, die Konfigurationsinformationen der Ladestation angibt. Wie beschrieben kann das Hinzufügen dieser mittels der Schnittstelle erfolgen. Auch das Editieren der vorgegebenen Zuordnung kann mittels der Schnittstelle erfolgen. Es kann vorgesehen sein, dass die Schnittstelle, wenn sie als graphische Benutzerschnittstelle ausgebildet ist, visualisiert wird. Dies kann beispielsweise auf einem Bildschirm einer der Ladestationen erfolgen oder auf einem Bildschirm eines anderen Computers erfolgen. Die graphische Benutzerschnittstelle kann hierzu beispielsweise als eine Website ausgebildet sein und/oder über HTTP oder HTTPS auf dem Computer aufrufbar sein.

Zudem kann vorgesehen sein, dass die gewünschte Funktion ein Abrufen einer Information von der Ladestation und/oder ein Ausführen einer Betriebsanweisung auf der Ladestation ist. Die Information kann hierbei insbesondere eine Zustandsinformation der Ladestation sein. Die Zustandsinformation kann sich auf einen Ladevorgang eines Elektrofahrzeugs an der Ladestation beziehen. Die Betriebsanweisung kann auch als Steuerbefehl bezeichnet werden. Die Betriebsanweisung bzw. der Steuerbefehl kann sich ebenfalls auf einen Ladevorgang eines Elektrofahrzeugs an der Ladestation beziehen. Er kann insbesondere die Steuerung des Ladevorgangs betreffen, beispielsweise durch Starten des Ladevorgangs, Beenden des Ladevorgangs oder Vorgeben einer Ladeleistung. Für diese beispielhaft genannten verschiedenen Betriebsanweisungen können unterschiedliche Register zu beschreiben sein. Insbesondere kann das Abrufen der Information(en) von der Ladestation durch ein Auslesen des Registers erfolgen. Auch insbesondere kann das Ausführen einer Betriebsanweisung auf der Ladestation durch Beschreiben des Registers erfolgen. Beim Auslesen kann ein bestimmter Funktionswert in dem Register hinterlegt sein. Der ausgelesene Funktionswert kann unter verschiedenen Funktionswerten eine bestimmte Information repräsentieren, die der Computer anhand des Funktionswerts bestimmen kann. Entsprechend versteht der Computer den im Register hinterlegten Funktionswert anhand der Funktion des Registers als die Information. Beim Beschreiben kann ein bestimmter Funktionswert in dem Register vorliegen, der dann vom Computer mit einem anderen Funktionswert beschrieben bzw. überschrieben wird, um die gewünschte Funktion auszuüben, etwa um den Ladevorgang zu starten oder die Ladeleistung bei einem Ladevorgang zu verändern.

Außerdem kann vorgesehen sein, dass Registeradressen eines funktionsgleichen Registers von verschiedenen Ladestationen anhand der vorgegebenen Zuordnung ermittelt werden, um dieselbe gewünschte Funktion auf den verschiedenen Ladestationen zu erzielen, woraufhin die ermittelten Registeradressen abgerufen werden und die Register an den abgerufenen Registeradressen im Rahmen des lokalen Lastmanagements zum Ausüben der gewünschten Funktion ausgelesen und/oder beschrieben werden. Mit anderen Worten kann auch ausgedrückt werden, dass das Verfahren die folgenden Schritte umfassen kann:
(a) Ermitteln einer Registeradresse eines Registers einer ersten Ladestationen für eine gewünschte Funktion dieser ersten Ladestation anhand einer vorgegebenen Zuordnung der funktionsgleichen Register zu den verschiedenen Registeradressen der Ladestationen,
(b) Abrufen der ermittelten Registeradresse des Registers der ersten Ladestation,
(c) Auslesen und/oder Beschreiben des Registers an der abgerufenen Registeradresse des Registers der ersten Ladestation zum Ausüben der gewünschten Funktion der ersten Ladestation,
(d) Ermitteln einer Registeradresse eines Registers einer zweiten Ladestation für die gewünschte Funktion dieser zweiten Ladestation anhand der vorgegebenen Zuordnung,
(e) Abrufen der ermittelten Registeradresse des Registers der zweiten Ladestation,
(f) Auslesen und/oder Beschreiben des Registers an der abgerufenen Registeradresse des Registers der zweiten Ladestation zum Ausüben der gewünschten Funktion der zweiten Ladestation.

Darin stimmen die gewünschten Funktionen miteinander überein, d. h., dass dieselbe Funktion an der ersten Ladestation und an der zweiten Ladestation ausgeübt wird. Hierzu ist jedoch erforderlich, dass unterschiedliche Registeradressen ermittelt und abgerufen werden, weil die Register sich nicht an den gleichen Registeradressen in den beiden Ladestationen befinden. Selbstverständlich ist dieses Verfahren für weitere Ladestationen entsprechend fortsetzbar, in denen dieselbe Funktion ausgeübt werden soll. Dieses Verfahren betrifft also den Fall, dass ein und dieselbe Funktion an mehreren oder allen Ladestationen, beispielsweise denen, die mit einem Ladevorgang betrieben werden, ausgeübt werden soll. Wenn beispielsweise die Verfügbarkeit der Ladestationen für einen Ladevorgang oder der Ladestrom beim Ladevorgang angefragt werden soll, dann geschieht dies parallel an allen Ladestationen. Insoweit werden in diesem Fall funktionsgleiche Register an unterschiedlichen Registeradressen der Ladestationen abgerufen bzw. ausgelesen und/oder besch rieben.

Es kann auch vorgesehen sein, dass in den Ladestationen identische Register an unterschiedlichen Registeradressen abgelegt sind. Identisch sind die Register dann, wenn sie identisch ausgelesen und/oder beschrieben werden können bzw. wenn sie beim Auslesen von entsprechenden Funktionswerten und/oder Beschreiben mit entsprechenden Funktionswerten dieselben Informationen abrufen und/oder Betriebsanweisungen ausführen. Entsprechend kann die vorgegebene Zuordnung als vorgegebene Zuordnung von identischen Registern zu den verschiedenen Registeradressen der Ladestationen ausgebildet sein.

Dabei kann ferner vorgesehen sein, dass das Verfahren ferner den Schritt eines Abstrahierens des Registers für die gewünschte Funktion umfasst. Hierzu kann ein entsprechendes Computerprogrammprodukt, wie es nachstehend noch beschrieben wird, über eine Abstraktionsschicht verfügen, die hierzu eingerichtet ist. Die Abstraktionsschicht kann zwischen dem lokalen Lastmanagement selbst mittels des Auslesens und/oder Beschreiben des Registers zum Ausüben der gewünschten Funktion und der vorgegebenen Zuordnung, insbesondere der Konkordanztabelle, fungieren. Das Abstrahieren kann für den Fall vorteilhaft sein, dass funktionsgleiche Register von zwei oder mehr Ladestationen zwar mitunter gleiche Funktionen aufweisen, aber gerade nicht identisch sind, wie zuvor bereits beschrieben worden ist. Wenn also mittels der funktionsgleichen, aber nicht identischen, Register unterschiedlicher Ladestationen dieselben Informationen ausgelesen und/oder Betriebsanweisungen ausgeführt werden soll, müssen mitunter die ausgelesenen Informationen und/oder auszuführenden Betriebsanweisungen bzw. die ausgelesenen Funktionswerte und/oder die zu beschreibenden Funktionswerte abstrahiert werden, um dies zu erreichen.

Ein Beispiel soll dies verdeutlichen. Betrachtet werden in diesem Beispiel ein erstes Register "Ermittlung des Ladezustands" und ein zweite Register "Ermittlung des Kabelzustands". Diese Register sind nicht identisch und zwei Ladestationen weisen beispielhaft nur eine der beiden auf. Um an beiden Ladestationen zu ermitteln, ob geladen wird, können aber beide Register ausgelesen werden. Hierzu wird angenommen, dass das erste Register beispielsweise sechs unterschiedliche Funktionswerte bzw. Zustandswerte 0, 1, 2, 3, 4, 5 annehmen kann, die ausgelesen werden können. Von diesen sechs Funktionswerten gibt die Nummer 3 an, dass ein Ladezustand aktiv ist. Wenn der Funktionswert 3 sich aktuell im Register befindet und dieser ausgelesen wird, wird vom Computer erkannt, dass die Ladestation sich in einem Ladezustand befindet. Das zweite Register kann beispielsweise fünf unterschiedliche Funktionswerte 0, 1, 3, 5, 7 aufweisen, die ausgelesen werden können. Dabei gibt der Funktionswert 3 an, dass das Kabel an der Ladestation angeschlossen und verriegelt ist. Insoweit sind die beiden Register aber nicht identisch, da gleiche Funktionswerte unterschiedliche Informationen liefern. Zum Verständnis: bei nichtidentischen Registern mit Ausführung von Betriebsanweisungen bei Beschreiben mit einem Funktionswert würde das Beschreiben mit gleichen Funktionswerten zu unterschiedlichen Betriebsanweisungen führen. Nun ist die ausgelesene Information des Registers für den Kabelzustand, wenn es den Funktionswert 7 enthält, dass die Ladestationen sich in einem Ladezustand befinden. Insoweit handelt es sich bei den beiden Registern also nicht um identische, aber um funktionsgleiche Register, vorliegend für die Funktion des Auslesens des Ladezustands. Auch wenn also beide Ladestationen keine identischen Register aufweisen, können trotzdem gleiche Funktionen ausgeführt werden. Das vorstehend beschriebene Abstrahieren ermöglicht in diesem Falle das Ausführen der gleichen Funktion auf beiden Ladestationen.

Ein weiteres Beispiel für das Abstrahieren bzw. die Abstraktionsschicht ist beispielsweise ein generierter Befehl für das Setzen einer Ladeleistung, welche an ein an die Ladestation angeschlossenes Fahrzeug abgegeben werden soll. Eine erste Ladestation eines ersten Herstellers kann beispielsweise nur ein Register zum Setzen eines Ladestroms zur Verfügung stellen. Eine zweite Ladestation eines zweiten Herstellers besitzt so ein Register nicht. Jedoch gibt es bei der zweiten Ladestation ein Register zum Setzen einer Ladeleistung. Unter der Annahme, dass die effektive (Netz-)Spannung bei der ersten Ladestation und der zweiten Ladestation gleich ist und, dass die erste Ladestation und die zweite Ladestation einen einphasigen Ladevorgang durchführen, ist die Funktion, welche sich hinter diesen beiden ungleichen Registern "verbirgt", aus physikalischer Sicht gleich.

Ferner kann die Abstraktionsschicht auch in einer weiteren Ausführungsformen Werte aus Registern umwandeln, damit diese Werte vom Computer verarbeitet werden. Das zweite Register "Ermittlung des Kabelzustands" im ersten Beispiel weist, wie erläutert, fünf mögliche Funktions- bzw. Zustandswerte auf. Es kann aber sein, dass die Zuordnung für diesen Anwendungsfall nur zwei Zustände kennt (Ist ein Kabel angeschlossen? → Ja [= 1. Zustand] / Nein [= 2. Zustand]). In diesem Fall kann die Abstraktionsschicht die fünf möglichen Zustände des ersten Registers auf die zwei Zustände, welche die Zuordnung kennt und verarbeiten kann, umwandeln. Vorteilhafterweise kann dadurch die vorgegebene Zuordnung losgelöst von den angeschlossenen Ladestationen und deren jeweiligen Charakteristika implementiert werden.

Gemäß einem zweiten Aspekt der Erfindung wird die eingangs erwähnte Aufgabe gelöst durch ein Computerprogrammprodukt, umfassend Befehle, die bei der Ausführung des Computerprogrammprodukts durch einen Computer (insbesondere einer Vorrichtung, wie nachstehend noch beschrieben wird) diesen veranlassen, das Verfahren nach dem ersten Aspekt der Erfindung durchzuführen.

Dabei kann die vorgegebene Zuordnung der funktionsgleichen Register zu den verschiedenen Registeradressen der Ladestationen Teil des Computerprogrammprodukts sein bzw. als Information oder Programmcode in dem Computerprogrammprodukt integriert sein. Wie beschrieben, kann die vorgegebene Zuordnung hierzu als eine Konkordanztabelle vorliegen.

Es kann vorgesehen sein, dass das Computerprogrammprodukt einen ersten Funktionsblock aufweist, der die vorgegebene Zuordnung aufweist, und wobei der erste Funktionsblock zur Administration der vorgegebenen Zuordnung eingerichtet ist.

Ferner kann vorgesehen sein, dass der erste Funktionsblock mit einem zweiten Funktionsblock mittels einer Programmierschnittstelle verbunden ist, wobei der zweite Funktionsblock mit einem Lastmanagement-Algorithmus ausgestattet ist, der dazu eingerichtet ist, eine an dem Netzanschluss zur Verfügung stehende elektrische Leistung mittels des Auslesens und/oder Beschreibens von mittels des Lastmanagement-Algorithmus ermittelten Registern an den Registeradressen der Ladestationen an Fahrzeuge zu verteilen, die an den Ladestationen geladen werden.

Neben dem ersten Funktionsblock und dem zweiten Funktionsblock können weitere Funktionsblöcke in dem Computerprogrammprodukt vorgesehen werden. Ein weiterer dritter Funktionsblock kann in Form eines Kommunikationssteuerprogramms für die Kommunikation zwischen den Ladestationen vorgesehen sein. Eine weiterer vierter Funktionsblock kann eine Benutzerschnittstelle, beispielsweise in Form einer Benutzeroberfläche, sein.

Gemäß einem dritten Aspekt der Erfindung wird die eingangs erwähnte Aufgabe gelöst durch einen computerlesbaren Datenspeicher, auf dem das Computerprogrammprodukt nach dem zweiten Aspekt der Erfindung gespeichert ist.

Gemäß einem vierten Aspekt der Erfindung wird die eingangs erwähnte Aufgabe gelöst durch eine Vorrichtung mit einem Computer zum lokalen Lastmanagement von Ladestationen zum Laden von Elektrofahrzeugen in einem Ladestationssystem, wobei die Ladestationen an einem gemeinsamen Netzanschluss angeschlossen sind und mit Registern ausgestattet sind, die mittels des Computers auslesbar und/oder beschreibbar sind, wobei die Ladestationen sich derart voneinander unterscheiden, dass in den Ladestationen enthaltene funktionsgleiche Register an unterschiedlichen Registeradressen in den Ladestationen abgelegt sind, wobei die Vorrichtung einen Datenspeicher mit einer vorgegebenen Zuordnung der funktionsgleichen Register zu den verschiedenen Registeradressen der Ladestationen aufweist und der Computer zum Durchführen der folgenden Schritte eingerichtet ist:
(a) Ermitteln einer Registeradresse eines Registers einer der Ladestationen für eine gewünschte Funktion anhand der vorgegebenen Zuordnung,
(b) Abrufen der ermittelten Registeradresse, und
(c) Auslesen und/oder Beschreiben des Registers an der abgerufenen Registeradresse im Rahmen des lokalen Lastmanagements zum Ausüben der gewünschten Funktion.

Demnach weist die Vorrichtung gemäß dem vierten Aspekt der Erfindung die bereits im Hinblick auf das Verfahren nach dem ersten Aspekt der Erfindung erläuterten Vorteile auf. Ferner kann die Vorrichtung die erläuterten Merkmale des Verfahrens aufweisen bzw. dazu eingerichtet sein, die zu dem Verfahren erläuterten Merkmale auszuführen, soweit es sich hierbei um Verfahrensmerkmale handelt.

Es kann vorgesehen sein, dass die vorgegebene Zuordnung als eine Konkordanztabelle in dem Datenspeicher abgespeichert ist. Die Konkordanztabelle kann wie bereits zuvor beschrieben ausgebildet sein.

Ferner kann vorgesehen sein, dass die Vorrichtung eine Kommunikationsschnittstelle zum Herstellen von Kommunikationsverbindungen zwischen dem Computer und den Ladestationen aufweist. Dadurch können die bereits beschriebenen Kommunikationsverbindungen zwischen dem Computer und den Ladestationen aufgebaut werden. Die Kommunikationsschnittstelle kann insbesondere physikalisch sein. Es kann sich dabei beispielsweise um eine Ethernet-Kommunikationsschnittstelle handeln. Die Ethernet-Kommunikationsschnittstelle kann in der Vorrichtung einen entsprechend Ethernet-Chip aufweisen, der für eine Ethernet-Kommunikationsverbindung zuständig ist.

Zudem kann vorgesehen sein, dass die Kommunikationsschnittstelle zur Unterstützung eines Modbus-Protokolls, insbesondere eines Modbus/TCP-Protokolls, eingerichtet ist.

Mittels des Modbus/TCP-Protokolls können einzelne Register einer Ladestation ausgelesen oder beschrieben werden.

Auch kann vorgesehen sein, dass die Vorrichtung als eine der Ladestationen des Ladestationssystems ausgebildet ist. Dies erlaubt die Integration der Funktionalität der Vorrichtung in eine Ladestation, sodass bereits bestehende Ressourcen, insbesondere der Computer und der Datenspeicher, vorteilhafterweise genutzt werden können, was die Kosten des Ladestationssystems senkt. Selbstverständlich kann die Vorrichtung alternativ eine von den Ladestationen separate Vorrichtung mit einem Gehäuse sein, die jedoch mit den Ladestationen entsprechend verbunden ist, beispielsweise mittels einer physikalischen Kommunikationsverbindung insbesondere mit Ethernet-Standard.

Der logische Aufbau des Ladestationssystems kann in einer solchen Ausführungsform dergestalt sein, dass die Ladestation gemäß dem vierten Aspekt der Erfindung als eine sog. Controller-Ladestation oder Master-Ladestation, also Master-Vorrichtung, fungiert, während andere Ladestationen des Ladestationssystems als sog. Slave-Ladestationen, also Slave-Vorrichtungen, fungieren. Dabei können die Betriebssysteme der Slave-Ladestationen mit dem Betriebssystem, das beispielsweise auf Linux basieren kann, der Controller-Ladestation, insbesondere mittels eines sog. Switches bzw. einer Netzwerkweiche oder eines Verteilers, verbunden sein. Für die Verbindung kann die bereits erwähnte physikalische Ethernet-Datenleitung genutzt werden. Jede der Ladestationen weist eine Ladestationsapplikation bzw. Ladestationssoftware auf, die auf dem Betriebssystem ausgeführt wird. Die Controller-Ladestation weist hingegen zusätzlich das Computerprogrammprodukt nach dem zweiten Aspekt der Erfindung auf, welches auf dem Betriebssystem der Controller-Ladestation ausgeführt wird, auf. Das Computerprogrammprodukt kann auch als Controller für das lokale Lastmanagement bezeichnet werden. Dadurch kann die Controller-Ladestation das computerimplementierte Verfahren auf den Slave-Ladestationen bzw. dem gesamten Ladestationssystem ausführen. Mit anderen Worten ist die Controller-Ladestation ein Master in einer Master-Slave-Konfiguration bzw. Master-Slave-Ansteuerung mit den Slave-Ladestationen, welche hier die Slaves bilden.

Gemäß einem fünften Aspekt der Erfindung wird die eingangs erwähnte Aufgabe schließlich gelöst durch ein Ladestationssystem mit Ladestationen zum Laden von Elektrofahrzeugen, die an einem gemeinsamen Netzanschluss angeschlossen sind, wobei das Ladestationssystem eine Vorrichtung nach dem vierten Aspekt der Erfindung aufweist. Wie bereits erläutert, kann die Vorrichtung dabei eine der Ladestationen sein.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigen:
- Fig. 1: eine schematische Ansicht eines Ausführungsbeispiels eines erfindungsgemäßen Ladestationssystems;
- Fig. 2: eine schematische Darstellung eines Ausführungsbeispiels einer vorgegebenen Zuordnung in dem Ladestationssystem aus Fig.1 ; und
- Fig. 3: ein schematisches funktionales Blockdiagram des Computerprogrammprodukts in dem Ladestationssystem aus Fig. 1.

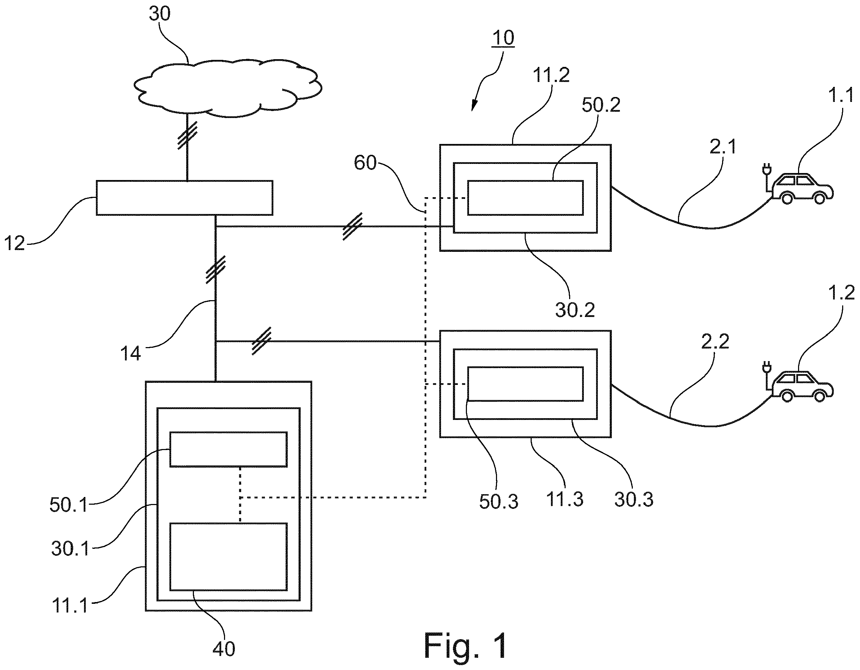

Elemente mit gleicher Funktion und Wirkungsweise sind in den Figuren 1 bis 3 jeweils mit denselben Bezugszeichen versehen. Soweit gleiche Elemente mehrmals in einer der Figuren dargestellt sind, wird das gleiche Bezugszeichen für alle Elemente verwendet, wobei die Elemente fortlaufend nummeriert werden. Die fortlaufende Nummerierung der Elemente wird durch einen Punkt vom Bezugszeichen getrennt.

Figur 1 zeigt ein beispielhaftes Ladestationssystem 10 gemäß einem Ausführungsbeispiel der Erfindung. Das Ladestationssystem 10 weist drei Ladestationen 11.1, 11.2, 11.3 auf. Die Ladestationen 11.1, 11.2, 11.3 sind mittels entsprechender Energieleitungen 14 (hier nur einphasig dargestellt, obgleich diese gleichwohl dreiphasig ausgebildet sein können) mit einem Netzanschluss 12 verbunden, um Strom von einem an dem Netzanschluss 12 angeschlossenen Energienetz 13 zu beziehen.

Gezeigt ist vorliegend beispielhaft, dass zwei Fahrzeuge 1.1, 1.2 mittels entsprechender Ladekabel 2.1, 2.2 an den Ladestationen 11.2, 11.3 für einen Ladevorgang angeschlossen sind. Selbstverständlich kann auch an der Ladestation 11.1 ein nicht gezeigtes Fahrzeug 1 entsprechend angeschlossen werden. Alternativ können die Ladestationen 11.1, 11.2, 11.3 anders als durch physische Ladekabel ein Fahrzeug 1 aufladen, beispielweise mittels drahtloser Energieübertragung.

Jede Ladestation 11.1, 11.2, 11.3 umfasst eine Recheneinheit bzw. einen Computer 30.1, 30.2, 30.3. Jede der Ladestationen 11.1, 11.2, 11.3 weist ihrerseits eine Ladestationssoftware 50.1, 50.2, 50.3 auf, die auf ihrem jeweiligen Computer 30.1, 30.2, 30.3 ausgeführt wird. Durch entsprechende, nicht gekennzeichnete, Kommunikationsschnittstellen und eine entsprechende physikalische Datenverbindung 60, vorliegend auf Ethernet-Basis, stehen die Ladestationen 11.1, 11.2, 11.3 in einer Kommunikationsverbindung miteinander. Über diese Ethernet-Verbindung 60 kann eine Modbus/TCP-Kommunikation durchgeführt werden.

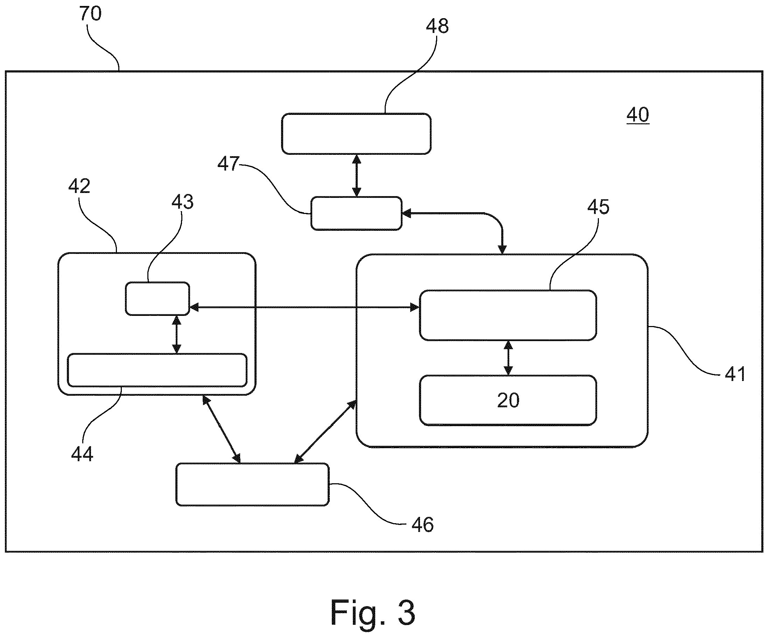

Auf dem Computer 30.1 der ersten Ladestation 11.1 wird neben der Ladestationssoftware 50.1 auch ein Computerprogrammprodukt 40 für ein lokales Lastmanagement bzw. zur Durchführung eines Verfahrens eines lokalen Lastmanagements der Ladestationen 11.1, 11.2, 11.3 ausgeführt. Das Computerprogrammprodukt 40 weist hierzu unter anderem einen entsprechenden Algorithmus für das lokale Lastmanagement 44 auf, wie in Figur 3 zu erkennen ist. Die erste Ladestation 11.1 kann insoweit auch als eine Master-Ladestation 11.1 bezeichnet werden. Alternativ kann das Computerprogrammprodukt 40 auf einem nicht gezeigten Computer 30 einer externen Vorrichtung ausgeführt werden, die in Kommunikation mit den Ladestationen 11.1, 11.2, 11.3 steht.

Das lokale Lastmanagement kann folglich für eine Vielzahl von Ladestationen 11.1, 11.2, 11.3 für Fahrzeuge 1 ausgelegt sein. Der Begriff "lokal" im lokalen Lastmanagement beruht darauf, dass die Vielzahl der Ladestationen 11.1, 11.2, 11.3 an den gemeinsamen Netzanschluss 12 angeschlossen ist. Die angeschlossenen Ladestationen 11.1, 11.2, 11.3 können sich daher in Nähe zueinander befinden. Der Hauptzweck des lokalen Lastmanagements kann in der Optimierung der Leistungsabgabe des Netzanschlusses 12 liegen. Wenn mindestens ein Fahrzeug 1, beispielsweise ein Elektrofahrzeug, an einer angeschlossenen Ladestation 11 geladen wird, sollte die Leistungsaufnahme am Netzanschluss auf einem maximalen Niveau liegen. Die Datenkommunikation zwischen den Ladestationen 11.1, 11.2, 11.3, kann wie bereits oben erläutert, auf dem Modbus/TCP-Protokoll basieren, wobei die physikalische Schicht der Datenkommunikation auf einem Ethernet-Standard basieren kann.

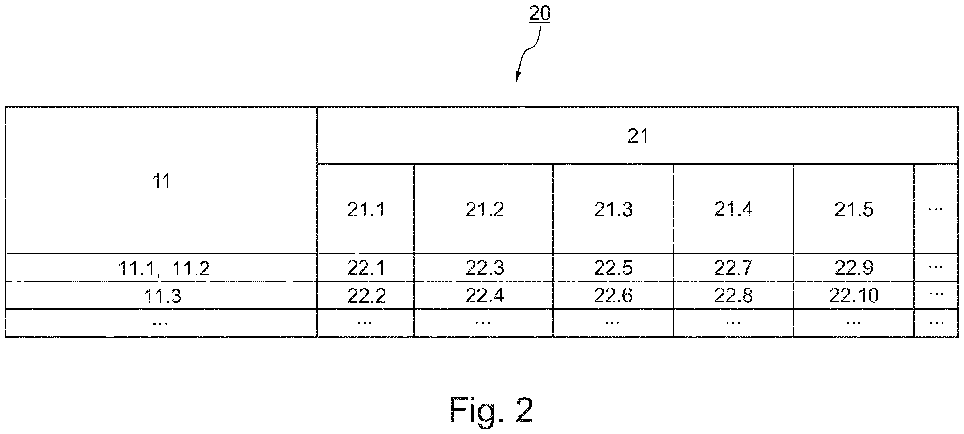

Es folgt eine Erläuterung des logischen Aufbaus des Ladestationssystems 10 anhand der Figuren 1 und 3. Vorliegend ist die erste Ladestation 11.1, wie oben erwähnt, eine Master-Ladestation bzw. Controller-Ladestation 11.1. Diese bzw. das darauf befindliche Computerprogrammprodukt 40 überwacht den Zustand der angeschlossenen Slave-Ladestationen 11.2, 11.3 durch Auslesen von Werten aus Registern 21 (siehe Figur 2). Zusätzlich sendet die Master-Ladestation 11.1 Befehle an die angeschlossenen Slave-Ladestationen 11.2, 11.3 durch Beschreiben der Register 21 mit Werten. Die Befehle können beispielsweise Anweisungen für die maximale elektrische Leistung, die eine Slave-Ladestation 11.2, 11.3 an ein angeschlossenes Fahrzeug 1 liefern kann, enthalten. Wie bereits erläutert worden ist, umfasst das Computerprogrammprodukt 40 den Algorithmus für das Lastmanagement 44. Dieser überwacht den aktuellen Zustand jeder daran angeschlossenen Slave-Ladestation 11.2, 11.3 und bestimmt die Befehle zur Erreichung des Hauptzwecks.

Die Ladestationssoftware 50.1 des Computers 30.1 der ersten Ladestation 11.1 führt zum einen eine Stationsanwendung für die Ladestation (auch als sog. Station Application bezeichenbar, nicht gezeigt) und zum anderen das Computerprogrammprodukt 40 für das lokale Lastmanagement aus. Jede dieser Anwendungen läuft in einem einzigen Container. Die Stationsanwendung dient der Bereitstellung einer Ladestation 11 für einen Kunden. Mit Hilfe der Stationsanwendung kann ein Kunde an der Ladestation 11.1 autorisiert werden. Nach einer erfolgreichen Autorisierung kann ein Kunde ein Fahrzeug 1 aufladen. Das Computerprogrammprodukt 40 wird vorliegend nur zur Verwaltung und/oder Steuerung des Lastmanagements verwendet.

Die erste Ladestation 11.1 ist über die physikalische Ethernet-Datenverbindung 60 mit den beiden Slave-Ladestationen 11.2, 11.3 verbunden. Die Kommunikation zwischen der ersten Ladestation 11.1 und den beiden Ladestationen 11.2, 11.3 basiert auf einem Modbus/TCP-Protokoll. Die Kommunikation bietet die Möglichkeit, Register 21 einer der Ladestationen 11.2, 11.3 zu lesen oder zu schreiben. Die Register 21 können beispielsweise zur Anzeige eines Zustands einer Ladestation 11.1, 11.2, 11.3 durch Lesen der Register 21 oder zur Ausführung von Befehlen eines lokalen Lastmanagements durch Beschreiben der Register 21 verwendet werden. Eine Aufgabe der Ladestationssoftware 50.1 auf dem Computer 30.1 ist es, die Register 21 einer der Slave-Ladestationen 11.2, 11.3 zu lesen und zu schreiben. Die Kommunikation zwischen der Master-Ladestation 11.1 und den Slave-Ladestationen 11.2, 11.3 basiert vorliegend nicht auf einer Version des Open Charge Point Protocol. Es ist möglich, dass die Ladestationssoftware 50.1 der ersten Ladestation 11.1 auch ein Slave des Computerprogrammprodukts 40 ist.

In der Phase der Inbetriebnahme kann ein Administrator das lokale Lastmanagement einrichten. Der Einrichtungsvorgang wird nur am Computerprogrammprodukt 40 durchgeführt. Eine Benutzerschnittstelle 48 in Form eines Web-GUls, die vom Computerprogrammprodukt 40 zur Verfügung gestellt wird, unterstützt den Administrator während des Einrichtungsvorgangs. Der Administrator ist berechtigt, Slave-Ladestationen 11.2, 11.3 hinzuzufügen, zu bearbeiten oder zu löschen. Das Computerprogrammprodukt 40 enthält eine Datenbank 45 für alle angeschlossenen Slave-Ladestationen 11.2, 11.3. Informationen in Bezug auf eine einzeln angeschlossene Slave-Ladestation 11.2, 11.3 (auch als Datensatz bezeichnet) können in der Datenbank 45 des Computerprogrammprodukts 40 gespeichert werden. Ein Datensatz einer angeschlossenen Slave-Ladestation 11.2, 11.3 sollte die Anzahl der Ladepunkte, den Typ und die Netzwerkadresse (insbesondere die IP-Adresse) der Slave-Ladestationen 11.2, 11.3 enthalten. Nach dem Abschluss des Einrichtungsvorgangs ist der Datensatz einer Slave-Ladestation 11.2, 11.3 mittels der Benutzerschnittstelle 48 editierbar. So können mögliche Fehler, die während des Einrichtungsvorgangs auftreten können, zu einem späteren Zeitpunkt behoben werden.

Die folgenden drei Schritte können während der Laufzeit des Computerprogrammprodukts 40 bzw. in dem Verfahren zum lokalen Lastmanagement periodisch durchgeführt werden. Die Periodendauer kann im Bereich von Minuten liegen. Die drei Schritte werden von dem Computerprogrammprodukt 40 ausgeführt.

Im ersten Schritt wird der aktuelle Status aller angeschlossenen Slave-Ladestationen 11.2, 11.3 aufgezeichnet. Diese Aufzeichnung erfolgt durch Auslesen der oben genannten Register 21 mittels Modbus/TCP-Kommunikation. Für die Kommunikation ist es notwendig, dass die Netzwerkadressen der angeschlossenen Slave-Ladestationen 11.2, 11.3 bekannt sind. Der aktuelle Status einer Slave-Ladestation 11.2, 11.3 beinhaltet insbesondere die Information, ob ein Fahrzeug 1 gerade an einer Slave-Ladestation 11.2, 11.3 angeschlossen ist. Wenn an einem Ladepunkt einer Slave-Ladestation 11.2, 11.3 gerade ein Ladevorgang durchgeführt wird, ist der aktuell gemessene Ladestrom auch für den Status der Slave-Ladestation 11.2, 11.3 relevant. Der gemessene Ladestrom steht in der Regel im Verhältnis zur Ladeleistung.

Im zweiten Schritt wird der zuvor aufgezeichnete Zustand im Rahmen des Algorithmus zur Durchführung des lokalen Lastmanagements verarbeitet 44. Der Algorithmus für das lokale Lastmanagement 44 kann z. B. während des Einrichtungsprozesses vom Administrator ausgewählt werden. Das Ergebnis des Algorithmus 44 können Befehle (oder Anweisungen) für die angeschlossenen Slave-Ladestationen 11.2, 11.3 sein. Wenn sich der zuvor aufgezeichnete Zustand nicht geändert hat, kann dies dazu führen, dass es keine Befehle oder Anweisungen gibt.

In einem dritten Schritt werden die Befehle über Modbus/TCP-Kommunikation an die angeschlossenen Slave-Ladestationen 11.2, 11.3 übertragen. Zu diesem Zweck werden insbesondere die relevanten Register 21 der angeschlossenen Slave-Ladestationen 11.2, 11.3 beschrieben.

Im Folgenden werden anhand der Figur 3 Funktionsblöcke 41, 42, 46, 48 des Computerprogrammprodukts 40, das auf einem Datenspeicher 70 gespeichert ist, näher erläutert. Dabei handelt es sich um ein beispielhaftes Entwurfskonzept für das Computerprogrammprodukt 40.

Das Computerprogrammprodukt 40 bietet eine Benutzerschnittstelle 48 als einen vierten Funktionsblock 48, der als eine grafische Benutzeroberfläche (GUI) ausgebildet sein kann. Die GUI ist eine Web-Seite. Wenn sich ein Benutzer über die IP-Adresse des Computerprogrammprodukts 40 mit einer HTTP-Webseite verbindet, wird eine Anmelde-Webseite für das Computerprogrammprodukt 40 angezeigt. Auf der Login-Webseite werden ein Benutzername und ein Benutzerkennwort für das weitere Vorgehen benötigt. Für das Computerprogrammprodukt 40 kann nur ein Benutzer (Administrator) bekannt sein, da typischerweise andere Benutzer nicht erforderlich sind. Nach dem Anmeldevorgang kann der Administrator alle Informationen, die benötigt werden, in Registern oder anderen grafischen Komponenten sehen. Darüber hinaus sollte die Web-GUI den aktuellen Status des Lastmanagementsystems für einen Benutzer (Administrator) bereitstellen. Der Benutzer sollte in der Lage sein, die wesentlichen Informationen auf einen Blick zu sehen. Die Web-GUI sollte auch zur Behebung eines möglichen Fehlers verwendet werden. Daher kann die Web-GUI eine Option für einen Fehlerlogger bieten.

Die Web-GUI ist mit einem ersten Funktionsblock 41 zur Administration verbunden. Die Verbindung kann durch die Verwendung einer REST-Anwendungsprogrammierschnittstelle 47 (Representational State Transfer API) realisiert werden. Der Vorteil der Verwendung einer REST-API 47 ist, dass in zukünftigen Systemen die Web-GUI in einem separaten Software-Container realisiert werden kann, der auf dem Betriebssystem der ersten Ladestation 11.1 läuft. Der erste Funktionsblock 41 umfasst im Wesentlichen die bereits erwähnte Datenbank 45 für die an die erste Ladestation 11.1 angeschlossenen Slave-Ladestationen 11.2, 11.3. Die Datenbank 45 enthält die notwendigen Informationen aller angeschlossenen Slave-Ladestationen 11.2, 11.3 (insbesondere den Typ und die Netzwerkadresse).

Die Modbus/TCP-Kommunikation ist für Lastmanagement-Anwendungen nicht standardisiert. Es ist beispielsweise möglich, dass der aktuell gemessene Stromwert der ersten Phase an einer Ladestation 11.1 des Herstellers X im Register 21 mit der Registeradresse 0x1002 und der aktuell gemessene Stromwert der ersten Phase an einer Ladestation 11.2 des Herstellers Y im Register 21 mit der Registeradresse 0x2080 gespeichert wird. Aus diesem Grund sollte der erste Funktionsblock 41 die bereits zuvor erläuterte Konkordanztabelle 20 enthalten. Mit Hilfe der Konkordanztabelle 20 sollen die Unterschiede in der Modbus/TCP-Kommunikation von zwei verschiedenen Slave-Ladestationen 11.2, 11.3 berücksichtigt werden. Wie im oberen Absatz erwähnt, kann ein Unterschied z. B. in den unterschiedlichen Registeradressen 22 liegen.

Der zweite Funktionsblock 42 dient dem lokalen Lastmanagement. In diesem Funktionsblock 42 wird der zuvor erwähnte Algorithmus für das lokale Lastmanagement 44 ausgeführt. Der Algorithmus 44 wird in dem oben erwähnten zweiten Schritt ausgeführt. Der Algorithmus wird über eine API 43 mit dem ersten Funktionsblock 41 verbunden. Die API 43 ermöglicht ein einfaches Ersetzen des Algorithmus 44, indem nur der Algorithmus 44 geändert wird.

Der dritte Funktionsblock 46 ist für die Modbus/TCP-Kommunikation zuständig. Modbus/TCP ist eine TCP/IP-basierte Kommunikation, die z. B. über die physikalische Ethernet-Verbindung 60 aus Fig. 1 abgewickelt werden kann. Mit Hilfe von Modbus/TCP können einzelne Register 21 einer Ladestation ausgelesen oder beschrieben werden. Die Modbus/TCP-Kommunikation erfolgt bevorzugt unverschlüsselt. Der Betreiber des Ladestationssystems 10 ist dann dafür verantwortlich, dass keine Möglichkeit für einen unberechtigten Benutzer besteht, sich an die Ethernet-Verbindung 60 anzuschließen.

Anhand der Figuren 1 und 2 wird im Folgenden ein beispielhaftes Anwendungsbeispiel für ein computerimplementiertes Verfahren zum lokalen Lastmanagement der Ladestationen 11.1, 11.2, 11.3 erläutert. Der Netzanschluss 12 sei beispielsweise für eine Leistung von 4,6 kW ausgelegt. Dieser Wert ist in der Regel um ein Vielfaches höher. Aus Gründen der Verständlichkeit wird ein solch niedriger Wert angenommen.

Die dargestellten Ladestationen 11.1, 11.2, 11.3 basieren auf Ladestationen 11.1, 11.2, 11.3, welche in der Konkordanztabelle 20 der Figur 2 eingetragen sind, welche eine vorgegebene Zuordnung 20 repräsentiert. Bei der ersten Ladestation 11.1 und der zweiten Ladestation 11.2 handelt es sich vorliegend um eine X1000 vom Hersteller Fa. innogy. Die dritte Ladestation 11.3 ist vom Typ Y2000 vom Hersteller Fa. EON. Alle dargestellten Ladestationen sind in der Datenbank des lokalen Lastmanagements mit ihren Konfigurationsinformationen eingetragen. Vorliegend werden die Ladestationen 11.1, 11.2, 11.3 in der Konkordanztabelle 20 durch ein Ladestationscharakteristikum 11, hier durch ihre Bezeichnung mit ihren Bezugszeichen 11, eindeutig zugeordnet. Alternativ oder zusätzlich ist möglich, dass der Ladestationstyp und/oder der Hersteller der Ladestation 11 in der Konkordanztabelle 20 erfasst werden.

An der ersten Ladestation 11.1 ist vorliegend kein Fahrzeug 1 angeschlossen. Die zweite und die dritte Ladestation 11.2, 11.3 besitzen jeweils eine physikalische Verbindung mit einem ladebereiten Fahrzeug 1.1, 1.2.

Im Zuge des lokalen Lastmanagements werden periodisch (beispielsweise minütlich) sämtliche Register 21.1, 21.2, 21.3, 21.4, 21.5 aller im lokalen Lastmanagement angeschlossenen Ladestationen 11.1, 11.2, 11.3 ausgelesen, um einen aktuellen Zustand des lokalen Lastmanagements, genauer gesagt des Ladestationssystems 10, zu erfassen.

Anhand des erfassten aktuellen Zustands kann in einem nächsten Schritt der Algorithmus des lokalen Lastmanagements 44 Befehle generieren, welche von den angeschlossenen Ladestationen 11.1, 11.2, 11.3 verarbeitet werden können.

Beispielhaft wird in einem ersten Schritt der aktuelle Zustand aller angeschlossenen Ladestationen 11.1, 11.2, 11.3 erfasst. Hierzu soll zunächst von jeder angeschlossenen Ladestation das Register 21.1, welches vorliegend den IEC61851-1 Ladestatus betrifft, ausgelesen werden. Daher triggert der Algorithmus des lokalen Lastmanagements 44 das Auslesen des Registers 21.1 von jeder Ladestation 11.1, 11.2, 11.3 an. In diesem Anwendungsfall wird angenommen, dass keine Abstraktionsschicht erforderlich ist, da jede angeschlossene Ladestation 21.1, 21.2, 21.3 genau dieses Register 21.1 besitzt.

Mittels der Konkordanztabelle 20 wird nun ermittelt, dass für die erste Ladestation 11.1 und die zweite Ladestation 11.2, die identisch sind, aus der Registeradresse 22.1, die beispielsweise 0x1002 lautet, ausgelesen werden muss, um die Funktion des Registers 21.1, also das Auslesen des Ladestatus, auszuführen. Es werden für diese Registeradresse 22.1 Modbus/TCP-Nachrichten zum Auslesen an die erste Ladestation 11.1 und an die zweite Ladestation 11.2 gesendet. Ebenfalls wird mithilfe der Konkordanztabelle 20 ermittelt, dass für die dritte Ladestation 21.3 die Registeradresse 22.2, die beispielsweise 0x2004 lautet, aus dem Register 21.1 ausgelesen werden muss. Es wird für die Registeradresse 22.2 eine Modbus/TCP-Nachricht zum Auslesen an die dritte Ladestation 11.3 gesendet.

Die Antwortnachrichten mit den Werten der jeweiligen Register 21.1 von den Ladestation 11.1, 11.2, 11.3 werden anschließend von dem Computerprogrammprodukt 40 auf dem Computer 50.1 der ersten Ladestation 11.1 empfangen und verarbeitet. Der Wert der ersten Ladestation 11.1 weist darauf hin, dass an der ersten Ladestation 11.1 kein Fahrzeug 1 angeschlossen ist. Die Werte der zweiten und dritten Ladestation 11.2, 11.3 weisen darauf hin, dass jeweilig ein Fahrzeug 1.1, 1.2 mit den Ladestationen 11.2, 11.3 verbunden ist, und die Fahrzeuge 1.1, 1.2 eine Ladebereitschaft signalisieren. Dadurch, dass die Fahrzeuge 1.1, 1.2 eine Ladebereitschaft anzeigen, erfolgen in dem vorliegenden Anwendungsbeispiel keine weiteren Abfragen von aktuell gemessenen Ladeströmen von der zweiten Ladestation 11.2 und der dritten Ladestation 11.3. Durch die signalisierte Ladebereitschaft findet aktuell kein Ladevorgang statt.

Nach dem Erfassen des aktuellen Zustands führt der Algorithmus des lokalen Lastmanagements 44 Berechnungen durch. Das Hauptziel des lokalen Lastmanagements ist die Optimierung der Leistungsabgabe des Netzanschlusses 12. Wenn mindestens ein Fahrzeug 1 an einer angeschlossenen Ladestation 11 geladen wird, sollte die Leistungsabgabe am Netzanschluss 12 auf einem maximalen Niveau liegen. Dieses maximale Niveau ist in diesem Anwendungsfall gleich den 4,6 kW, da der Netzanschluss 12 nur für diesen Leistungswert ausgelegt ist.

Der Algorithmus des lokalen Lastmanagements 44 sei für das vorliegende Anwendungsbeispiel derart konzipiert, dass die maximal verfügbare Leistung (=4,6 kW) auf alle angeschlossenen Fahrzeuge 1.1, 1.2 stets gleich verteilt wird. Daneben sind selbstverständlich auch andere Algorithmen zur Lastverteilung möglich, beispielsweise "First Come, First Serve".

Im Zuge der Berechnung wird nun festgestellt, dass an der zweiten Ladestation 11.2 und der dritten Ladestation 11.3 mit einer maximalen Ladeleistung in Höhe von 2,3 kW geladen werden darf. In einem nächsten Schritt wird daraufhin jeweils ein Befehl zum Setzen dieser festgestellten Ladeleistung gesendet. Mithilfe der Konkordanztabelle 20 wird nun ermittelt, dass für die zweite Ladestation 11.2 der Wert in Höhe von 2,3kW in dem Register 21.3 an der Registeradresse 22.5, welche beispielsweise 0x1208 sein kann, geschrieben werden muss. Für die dritte Ladestation 11.3 muss dieser Wert in das Register 21.3 an der Registeradresse 22.6, welche beispielsweise 0x1608 sein kann, geschrieben werden. Es werden Befehle zum Schreiben der Register 21.3 in Form von Modbus/TCP-Nachrichten an die zweite Ladestation 11.2 und die dritte Ladestation 11.3 gesendet. Abschließend kann ein nächster Zyklus des lokalen Lastmanagement beginnen, indem nach beispielsweise einer Minute ein aktueller Zustand des Ladestationssystem 10 erfasst wird.

Wie die Figur 2 zu erkennen gibt, kann die Konkordanztabelle eine Vielzahl von funktionsgleichen Registern 21.1, 21.2, 21.3, 21.4, 21.5 aufweisen. Beispiele für Funktionen weiterer Register sind das Lesen eines aktuell gemessenen Ladestroms durch Register 21.2, das Lesen einer aktuell gemessenen Leistung durch Register 21.4 und das Öffnen der Verriegelung des Kabelsteckers durch Register 21.5. Die Register 21.1, 21.2, 21.3, 21.4, 21.5 erfüllen für die Ladestationen 11.1, 11.2, 11.3 immer dieselbe Funktion bei entsprechendem Lesen oder Beschreiben des Registers. Jedoch unterscheiden sich, wie die Konkordanztabelle 20 zeigt, die Registeradressen 22.1 ... 22.10 für die funktionsgleichen Register 21.1, 21.2, 21.3, 21.4, 21.5, sodass mittels der Konkordanztabelle 20 sichergestellt wird, dass für die gewünschte Funktion an der richtigen Registeradresse 22.1 ... 22.10 gelesen und/oder beschrieben wird.

### Bezuaszeichenliste

- 1: Fahrzeug
- 2: Ladekabel
- 10: Ladestationssystem
- 11: Ladestation
- 12: Netzanschluss
- 13: Energienetz
- 14: Energieleitung
- 20: vorgegebene Zuordnung, Konkordanztabelle
- 21: Register
- 22: Registeradresse
- 30: Computer
- 40: Computerprogrammprodukt
- 41: erster Funktionsblock
- 42: zweiter Funktionsblock
- 43: API
- 44: Algorithmus für lokales Lastmanagement
- 45: Datenbank
- 46: dritter Funktionsblock
- 47: REST-API
- 48: vierter Funktionsblock, Benutzerschnittstelle
- 50: Ladestationssoftware
- 60: physikalische Datenverbindung, Ethernet-Datenverbindung

## Patentansprüche

1. Computerimplementiertes Verfahren zum lokalen Lastmanagement von Ladestationen (11) zum Laden von Elektrofahrzeugen (1) in einem Ladestationssystem (10), wobei die Ladestationen (11) an einem gemeinsamen Netzanschluss (12) angeschlossen sind und mit Registern (21) ausgestattet sind, die mittels eines Computers (30) für das lokale Lastmanagement auslesbar und/oder beschreibbar sind, wobei die Ladestationen (11) sich derart voneinander unterscheiden, dass in den Ladestationen (11) enthaltene funktionsgleiche Register (21) an unterschiedlichen Registeradressen (22) in den Ladestationen (11) abgelegt sind, wobei das Verfahren die folgenden Schritte aufweist:
(a) Ermitteln einer Registeradresse eines Registers einer der Ladestationen (11) für eine gewünschte Funktion dieser Ladestation (11) anhand einer vorgegebenen Zuordnung (20) der funktionsgleichen Register (21) zu den verschiedenen Registeradressen (22) der Ladestationen (11),
(b) Abrufen der ermittelten Registeradresse (22), und
(c) Auslesen und/oder Beschreiben des Registers (21) an der abgerufenen Registeradresse (22) zum Ausüben der gewünschten Funktion der Ladestation (11) mit der abgerufenen Registeradresse (22).

2. Verfahren nach Anspruch 1, wobei die vorgegebene Zuordnung (20) als eine Konkordanztabelle (20) ausgebildet ist und das Ermitteln der zumindest einen Registeradresse (21) ein Entnehmen der zumindest einen Registeradresse (21) für die gewünschte Funktion aus der Konkordanztabelle (20) umfasst.

3. Verfahren nach Anspruch 1 oder 2, wobei eine an dem Netzanschluss (12) zur Verfügung stehende elektrische Leistung mittels des Auslesens und/oder Beschreibens von Registern (21) an ermittelten Registeradressen (22) der Ladestationen (11) an Fahrzeuge (1) verteilt werden, die an den Ladestationen (11) geladen werden.

4. Verfahren nach einem der voranstehenden Ansprüche, wobei das Verfahren ferner den Schritt eines Herstellens von Kommunikationsverbindungen zwischen dem Computer (30) und den Ladestationen (11) aufweist, wobei hierfür Kommunikationsadressen der Ladestationen (11) aus der vorgegebenen Zuordnung (20) ermittelt werden, und/oder wobei die gewünschte Funktion ein Abrufen einer Information von der Ladestation (11) und/oder ein Ausführen einer Betriebsanweisung auf der Ladestation (11) ist.

5. Verfahren nach einem der voranstehenden Ansprüche, wobei Registeradressen (22) eines funktionsgleichen Registers (21) von verschiedenen Ladestationen (11) anhand der vorgegebenen Zuordnung (20) ermittelt werden, um dieselbe gewünschte Funktion auf den verschiedenen Ladestationen (11) zu erzielen, woraufhin die ermittelten Registeradressen (22) abgerufen werden und die Register (21) an den abgerufenen Registeradressen (22) im Rahmen des lokalen Lastmanagements zum Ausüben der gewünschten Funktion ausgelesen und/oder beschrieben werden.

6. Verfahren nach einem der voranstehenden Ansprüche, wobei das Verfahren ferner den Schritt eines Abstrahierens des Registers (21) für die gewünschte Funktion umfasst.

7. Computerprogrammprodukt (40), umfassend Befehle, die bei der Ausführung des Computerprogrammprodukts (40) durch einen Computer (30) diesen veranlassen, das Verfahren nach einem der voranstehenden Ansprüche auszuführen.

8. Computerprogrammprodukt (40) nach Anspruch 7, wobei das Computerprogrammprodukt (40) einen ersten Funktionsblock (41) aufweist, der die vorgegebene Zuordnung (20) aufweist, und wobei der erste Funktionsblock (41) zur Administration der vorgegebenen Zuordnung (20) eingerichtet ist.

9. Computerprogrammprodukt (40) nach Anspruch 8, wobei der erste Funktionsblock (41) mit einem zweiten Funktionsblock (42) mittels einer Programmierschnittstelle (43) verbunden ist, wobei der zweite Funktionsblock (42) mit einem Lastmanagement-Algorithmus (44) ausgestattet ist, der dazu eingerichtet ist, eine an dem Netzanschluss (12) zur Verfügung stehende elektrische Leistung mittels des Auslesens und/oder Beschreibens von mittels des Lastmanagement-Algorithmus (44) ermittelten Registern (21) an den Registeradressen (22) der Ladestationen (11) an Fahrzeuge (1) zu verteilen, die an den Ladestationen (11) geladen werden.

10. Computerlesbarer Datenspeicher (70), auf dem das Computerprogrammprodukt (40) nach einem der Ansprüche 7 bis 9 gespeichert ist.

11. Vorrichtung mit einem Computer (30) zum lokalen Lastmanagement von Ladestationen (11) zum Laden von Elektrofahrzeugen (1) in einem Ladestationssystem (10), wobei die Ladestationen (11) an einem gemeinsamen Netzanschluss (12) angeschlossen sind und mit Registern (21) ausgestattet sind, die mittels des Computers (30) auslesbar und/oder beschreibbar sind, wobei die Ladestationen (11) sich derart voneinander unterscheiden, dass in den Ladestationen (11) enthaltene funktionsgleiche Register (21) an unterschiedlichen Registeradressen (22) in den Ladestationen (11) abgelegt sind, wobei die Vorrichtung einen Datenspeicher (70) mit einer vorgegebenen Zuordnung (20) der funktionsgleichen Register (21) zu den verschiedenen Registeradressen (22) der Ladestationen (11) aufweist und der Computer (30) zum Durchführen der folgenden Schritte eingerichtet ist:
(a) Ermitteln einer Registeradresse (22) eines Registers (21) einer der Ladestationen (11) für eine gewünschte Funktion anhand der vorgegebenen Zuordnung (20),
(b) Abrufen der ermittelten Registeradresse (22), und
(c) Auslesen und/oder Beschreiben des Registers (21) an der abgerufenen Registeradresse (22) im Rahmen des lokalen Lastmanagements zum Ausüben der gewünschten Funktion.

12. Vorrichtung nach Anspruch 11, wobei die vorgegebene Zuordnung (20) als eine Konkordanztabelle (20) in dem Datenspeicher (70) abgespeichert ist, und/oder wobei die Vorrichtung eine, insbesondere physikalische, Kommunikationsschnittstelle zum Herstellen von Kommunikationsverbindungen (60) zwischen dem Computer (30) und den Ladestationen (11) aufweist.

13. Vorrichtung nach Anspruch 12, wobei die Kommunikationsschnittstelle zur Unterstützung eines Modbus-Protokolls, insbesondere eines Modbus/TCP-Protokolls, eingerichtet ist.

14. Vorrichtung nach einem der Ansprüche 11 bis 13, wobei die Vorrichtung als eine der Ladestationen (11) des Ladestationssystems (10) ausgebildet ist.

15. Ladestationssystem (10) mit Ladestationen (11) zum Laden von Elektrofahrzeugen (1), die an einem gemeinsamen Netzanschluss (12) angeschlossen sind, wobei das Ladestationssystem (10) eine Vorrichtung nach einem der Ansprüche 11 bis 14 aufweist.

## Claims

1. Computer-implemented method for local load management on charging stations (11) for charging electric vehicles (1) in a charging station system (10), the charging stations (11) being connected to a common grid connection (12) and being equipped with registers (21) that can be read and/or written to by means of a computer (30) for the local load management, the charging stations (11) differing from one another in such a way that functionally identical registers (21) that the charging stations (11) contain are stored at different register addresses (22) in the charging stations (11), wherein the method comprises the following steps:
(a) ascertaining a register address of a register of one of the charging stations (11) for a desired function of this charging station (11) on the basis of a predefined association (20) between the functionally identical registers (21) and the various register addresses (22) of the charging stations (11),
(b) retrieving the ascertained register address (22), and
(c) reading and/or writing to the register (21) at the retrieved register address (22) in order to perform the desired function of the charging station (11) using the retrieved register address (22).

2. Method according to Claim 1, wherein the predefined association (20) is in the form of a concordance table (20) and ascertaining the at least one register address (21) comprises taking the at least one register address (21) for the desired function from the concordance table (20) .

3. Method according to Claim 1 or 2, wherein an electrical power available at the grid connection (12) is distributed to vehicles (1) that are being charged at the charging stations (11) by reading and/or writing to registers (21) at ascertained register addresses (22) of the charging stations (11).

4. Method according to one of the preceding claims, wherein the method further comprises the step of setting up communication connections between the computer (30) and the charging stations (11), this involving ascertaining communication addresses of the charging stations (11) from the predefined association (20), and/or wherein the desired function is retrieving information from the charging station (11) and/or executing an operating instruction on the charging station (11).

5. Method according to one of the preceding claims, wherein register addresses (22) of a functionally identical register (21) are ascertained by various charging stations (11) on the basis of the predefined association (20) in order to achieve the same desired function on the various charging stations (11), after which the ascertained register addresses (22) are retrieved and the registers (21) at the retrieved register addresses (22) are read and/or written to during the local load management in order to perform the desired function.

6. Method according to one of the preceding claims, wherein the method further comprises the step of abstracting the register (21) for the desired function.

7. Computer program product (40), comprising commands that, when the computer program product (40) is executed by a computer (30), cause said computer to carry out the method according to one of the preceding claims.

8. Computer program product (40) according to Claim 7, wherein the computer program product (40) has a first function block (41) that has the predefined association (20), and wherein the first function block (41) is designed to administer the predefined association (20).

9. Computer program product (40) according to Claim 8, wherein the first function block (41) is connected to a second function block (42) by means of a programming interface (43), the second function block (42) being equipped with a load management algorithm (44) that is designed to distribute an electrical power available at the grid connection (12) to vehicles (1) that are being charged at the charging stations (11) by reading and/or writing to registers (21), ascertained by means of the load management algorithm (44), at the register addresses (22) of the charging stations (11).

10. Computer-readable data memory (70) on which the computer program product (40) according to one of Claims 7 to 9 is stored.

11. Apparatus having a computer (30) for local load management on charging stations (11) for charging electric vehicles (1) in a charging station system (10), the charging stations (11) being connected to a common grid connection (12) and being equipped with registers (21) that can be read and/or written to by means of the computer (30), the charging stations (11) differing from one another in such a way that functionally identical registers (21) that the charging stations (11) contain are stored at different register addresses (22) in the charging stations (11), wherein the apparatus comprises a data memory (70) having a predefined association (20) between the functionally identical registers (21) and the various register addresses (22) of the charging stations (11) and the computer (30) is designed to perform the following steps:
(a) ascertaining a register address (22) of a register (21) of one of the charging stations (11) for a desired function on the basis of the predefined association (20),
(b) retrieving the ascertained register address (22), and
(c) reading and/or writing to the register (21) at the retrieved register address (22) during the local load management in order to perform the desired function.

12. Apparatus according to Claim 11, wherein the predefined association (20) is stored in the data memory (70) as a concordance table (20), and/or
wherein the apparatus comprises a, in particular physical, communication interface for setting up communication connections (60) between the computer (30) and the charging stations (11).

13. Apparatus according to Claim 12, wherein the communication interface is designed to support a Modbus protocol, in particular a Modbus/TCP protocol.

14. Apparatus according to one of Claims 11 to 13, wherein the apparatus is in the form of one of the charging stations (11) of the charging station system (10) .

15. Charging station system (10) having charging stations (11), for charging electric vehicles (1), that are connected to a common grid connection (12), wherein the charging station system (10) comprises an apparatus according to one of Claims 11 to 14.

## Revendications

1. Procédé mis en œuvre par ordinateur de gestion de charge locale de stations de charge (11) permettant de charger des véhicules électriques (1) dans un système de station de charge (10), dans lequel les stations de charge (11) sont raccordées à un raccordement au réseau (12) commun et sont dotées de registres (21) sur lesquels une lecture et/ou une écriture peut être effectuée au moyen d'un ordinateur (30) de gestion de charge locale, dans lequel les stations de charge (11) se distinguent les unes des autres par le fait que des registres (21) de même fonction contenus dans les stations de charge (11) sont stockés à des adresses de registre (22) différentes dans les stations de charge (11), dans lequel le procédé comprend les étapes suivantes :
(a) détermination d'une adresse de registre d'un registre de l'une des stations de charge (11) pour une fonction souhaitée de ladite station de charge (11) sur la base d'une affectation (20) prédéfinie des registres (21) de même fonction aux différentes adresses de registre (22) des stations de charge (11),
(b) appel de l'adresse de registre (22) déterminée, et
(c) lecture et/ou écriture du registre (21) à l'adresse de registre (22) appelée pour mettre en œuvre la fonction souhaitée de la station de charge (11) avec l'adresse de registre (22) appelée.

2. Procédé selon la revendication 1, dans lequel l'affectation (20) prédéfinie est réalisée sous la forme d'une table de concordance (20) et la détermination de l'au moins une adresse de registre (21) comprend une extraction de l'au moins une adresse de registre (21), pour la fonction souhaitée, de la table de concordance (20) .

3. Procédé selon la revendication 1 ou 2, dans lequel une puissance électrique disponible sur le raccordement au réseau (12) est distribuée aux véhicules (1) qui sont chargés sur les stations de charge (11) au moyen de la lecture et/ou de l'écriture de registres (21) à des adresses de registre (22) déterminées des stations de charge (11).

4. Procédé selon l'une quelconque des revendications précédentes, dans lequel le procédé comprend en outre l'étape d'établissement de connexions de communication entre l'ordinateur (30) et les stations de charge (11), dans lequel des adresses de communication des stations de charge (11) sont déterminées à cet effet à partir de l'affectation (20) prédéfinie, et/ou dans lequel la fonction souhaitée est un appel à une information à partir de la station de charge (11) et/ou une exécution d'une instruction de fonctionnement sur la station de charge (11).

5. Procédé selon l'une quelconque des revendications précédentes, dans lequel des adresses de registre (22) d'un registre (21) de même fonction de différentes stations de charge (11) sont déterminées sur la base de l'affectation (20) prédéfinie afin d'obtenir la même fonction souhaitée sur les différentes stations de charge (11), après quoi les adresses de registre (22) déterminées sont appelées et une lecture et/ou une écriture est effectuée dans les registres (21) aux adresses de registre (22) appelées dans le cadre de la gestion de charge locale pour mettre en œuvre la fonction souhaitée.

6. Procédé selon l'une quelconque des revendications précédentes, dans lequel le procédé comprend en outre l'étape d'abstraction du registre (21) pour la fonction souhaitée.

7. Produit de programme d'ordinateur (40) comprenant des instructions qui, lorsque le produit de programme d'ordinateur (40) est exécuté par un ordinateur (30), amènent ce dernier à mettre en œuvre le procédé selon l'une quelconque des revendications précédentes.

8. Produit de programme d'ordinateur (40) selon la revendication 7, dans lequel le produit de programme d'ordinateur (40) comprend un premier bloc fonctionnel (41) qui comprend l'affectation (20) prédéfinie, et dans lequel le premier bloc fonctionnel (41) est conçu pour l'administration de l'affectation (20) prédéfinie.

9. Produit de programme d'ordinateur (40) selon la revendication 8, dans lequel le premier bloc fonctionnel (41) est relié à un deuxième bloc fonctionnel (42) au moyen d'une interface de programmation (43), dans lequel le deuxième bloc fonctionnel (42) est doté d'un algorithme de gestion de charge (44) qui est conçu pour distribuer une puissance électrique disponible sur le raccordement au réseau (12) au moyen de la lecture et/ou de l'écriture de registres (21) déterminés au moyen de l'algorithme de gestion de charge (44) aux adresses de registre (22) des stations de charge (11) à des véhicules (1) qui sont chargés sur les stations de charge (11).

10. Mémoire de données lisible par ordinateur (70) sur laquelle est stocké le produit de programme d'ordinateur (40) selon l'une quelconque des revendications 7 à 9.

11. Dispositif comportant un ordinateur (30) de gestion de charge locale de stations de charge (11) permettant de charger des véhicules électriques (1) dans un système de station de charge (10), dans lequel les stations de charge (11) sont raccordées à un raccordement au réseau (12) commun et sont dotées de registres (21) sur lesquels une lecture et/ou une écriture peut être effectuée au moyen de l'ordinateur (30), dans lequel les stations de charge (11) se distinguent les unes des autres par le fait que des registres (21) de même fonction contenus dans les stations de charge (11) sont stockés à des adresses de registre (22) différentes dans les stations de charge (11), dans lequel le dispositif comporte une mémoire de données (70) présentant une affectation (20) prédéfinie des registres (21) de même fonction aux différentes adresses de registre (22) des stations de charge (11) et l'ordinateur (30) est conçu pour exécuter les étapes suivantes :
(a) détermination d'une adresse de registre (22) d'un registre (21) de l'une des stations de charge (11) pour une fonction souhaitée sur la base de l'affectation (20) prédéfinie,
(b) appel de l'adresse de registre (22) déterminée, et
(c) lecture et/ou écriture du registre (21) à l'adresse de registre (22) appelée dans le cadre de la gestion de charge locale pour mettre en œuvre la fonction souhaitée.

12. Dispositif selon la revendication 11, dans lequel l'affectation (20) prédéfinie est mémorisée sous la forme d'une table de concordance (20) dans la mémoire de données (70), et/ou dans lequel le dispositif comprend une interface de communication, en particulier physique, permettant d'établir des liaisons de communication (60) entre l'ordinateur (30) et les stations de charge (11).

13. Dispositif selon la revendication 12, dans lequel l'interface de communication est conçue pour prendre en charge un protocole Modbus, en particulier un protocole Modbus/TCP.

14. Dispositif selon l'une quelconque des revendications 11 à 13, dans lequel le dispositif est réalisé sous la forme de l'une des stations de charge (11) du système de station de charge (10).

15. Système de station de charge (10) comportant des stations de charge (11) permettant de charger des véhicules électriques (1), qui sont raccordées à un raccordement au réseau (12) commun, dans lequel le système de station de charge (10) comprend un dispositif selon l'une quelconque des revendications 11 à 14.
